# EUROPEAN PATENT SPECIFICATION

(11) **EP 2 962 862 B1**
(45) Date of publication and mention of the grant of the patent: **22.02.2017**
(21) Application number: 15171876.4
(22) Date of filing: 12.06.2015
(51) Int. Cl.: B42D 5/00, B42D 15/00, G09B 3/04

(54) **EXAMINATION BOOKLET COVER**
UMSCHLAG EINES PRÜFUNGSHEFTS
COUVERTURE DE LIVRET D'EXAMEN

(30) Priority: 01.07.2014 GB 201411678
(43) Date of publication of application: 06.01.2016
(73) Proprietor: Trade Forms (Scotland) Limited, Glasgow G52 4BL (GB)
(72) Inventor: CONNELL, Thomas S., Glasgow, East Renfrewshire G77 5EA (GB); CONNELL, Thomas W., Glasgow, East Renfrewshire G77 6TJ (GB)
(74) Representative: Murnane, Graham John

(56) References cited:
- EP-A1- 1 285 777
- DE-A1- 2 435 049
- DE-U1-202006 000 360
- US-A1- 2006 019 050
- US-A1- 2008 236 733

## Description

The present invention relates to apparatus for use in situations where information of a confidential nature is required to be completed on a form, paper, questionnaire or the like. Particularly this invention relates to a product and method for concealing information on a form, paper, questionnaire or the like which may have application in examinations, medical records, ballot papers, legal documents, banking or financial documents, salary pay slips and the like. In a particular embodiment, this invention relates to an examination booklet, which is adapted to allow the name of the candidate to be concealed during marking.

DE 24 35 049 A1 discloses an endless multi-layer composite for subsequent processing to produce business forms. US 2008/236733 A1 discloses a method for making an automation-compatible multi-layer web from a continuous web, where the multi-layer web can be separated into a plurality of multi-page inserts, such as booklets. DE 20 2006 000360 U1 discloses a writing pad having a stack of paper sheets secured by adhesive strips along the edges and with integral marker strips removed by tearing perforation lines.

EP 1 285 777 B1, which is considered to be the closest prior art, discloses an examination booklet cover for use with an examination booklet comprising a number of sheets of writing paper, stapled into a book. The candidate's personal information can be entered on the cover. An example of an examination booklet cover 10 disclosed in EP 1 285 777 B1 is illustrated in Figs. 1 and 2.

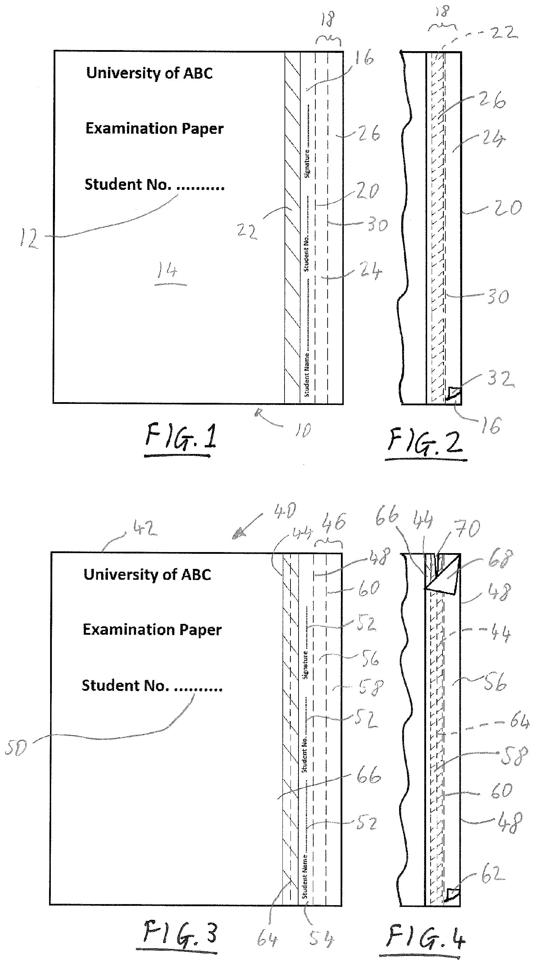

To maintain anonymity of the candidate for the person marking the examination script booklet, the candidate or another party writes only the candidate's number 12 on the major part 14 of the cover sheet 10, as shown in Fig. 1. The candidate's personal details, for example name and signature, are entered on a coverable area 16 at the side of the cover sheet. The cover sheet includes a foldable portion 18 at the edge of the cover sheet which can be folded along a first linear perforation 20 to cover the coverable area 16. The cover sheet includes an adhesive portion 22 which before folding can be exposed by removing a peelable release strip, and which after folding is fixed to the foldable portion 18.

Fig. 2 shows the prior art cover sheet after folding. The foldable portion 18 has two portions, a first portion 24, which after folding covers the coverable area 16, and a second portion 26, which after folding is fixed to the adhesive portion 22. The coverable area 16, which contains the candidate's personal information, remains covered by the foldable portion 18 during marking, so that the anonymity of the candidate is achieved. After marking the first portion 24 of the foldable portion 18 can be removed. The first portion 24 is connected to the coverable area 16 by the first linear perforation 20, which is now folded, and to the second portion 26 of the foldable portion by the second linear perforation 30. By pulling at one end 32 of the first portion 24, the perforations 20, 30 can be torn, and the first portion 24 can be removed as a continuous strip in a peeling action to expose the coverable area 16.

In normal use the adhesive is sufficient to deter tampering. However it is possible for a person wanting to expose the confidential information to peel the second portion 26 of the foldable portion 18 carefully away from the adhesive 22, and to subsequently replace the second portion 26 on the adhesive 22 portion after reading the information hidden on the coverable area 16. There would be no indication on the cover sheet to show that the cover sheet had been tampered with in this way, and that the confidential information had been improperly disclosed.

It is an object of the present invention to provide a cover sheet which prevents tampering while providing secure concealment of information until the information is revealed by an irreversible process.

According to a first aspect of the present invention there is provided a sheet of material having a coverable area, a foldable portion and first and second linear perforations, wherein the sheet of material can be folded at the first linear perforation such that a first portion of the foldable portion covers the coverable area and a second portion of the foldable portion is adhered to a bonding area adjacent to the coverable area, wherein the first and second linear perforations delimit a detachable section of the foldable portion which can be removed after the foldable portion has been adhered to the bonding area, and wherein a set of anti-tamper perforations is provided in one or both of the second portion of the foldable portion and the bonding area.

The anti-tamper perforations may extend from a bottom edge of the sheet to a top edge of the sheet.

Preferably the set of anti-tamper perforations comprises a plurality of longitudinal slits extending linearly in a longitudinal direction, adjacent slits being separated by a tie. Each slit is a perforation in the sheet. Each tie is an unperforated portion of the sheet. The length of each slit may be greater than the length of each tie.

In one embodiment the set of anti-tamper perforations may further comprise a plurality of transverse slits which extend perpendicular to the longitudinal slits. A pair of transverse slits may extend at each tie between the longitudinal slits, with one transverse slit arranged on each side of the tie.

In another embodiment the set of anti-tamper perforations may further comprise a plurality of angled slits which extend at an angle of between 30° and 60° to the longitudinal slits, preferably about 45° to the longitudinal slits. A pair of angled slits may extend at each tie between the longitudinal slits, with one angled slit arranged on each side of the tie.

Preferably an adhesive strip is provided on one or both of the second portion of the foldable portion and the bonding area.

In one embodiment the adhesive strip is provided on the second portion of the foldable portion and the set of anti-tamper perforations extends along the second portion of the foldable portion beneath the adhesive strip.

In another embodiment an adhesive strip is provided on the bonding area and the set of anti-tamper perforations extends along the bonding area beneath the adhesive strip.

In another embodiment the adhesive strip is provided on the second portion of the foldable portion and the set of anti-tamper perforations extends along the bonding area.

In another embodiment the adhesive strip is provided on the bonding area and the set of anti-tamper perforations extends along the second portion of the foldable portion.

The sheet of material may be paper.

The sheet of material may be thin cardboard.

The sheet of material may be a plastic.

The sheet of material may be attached to one or more sheets of paper to form a booklet.

The sheet of material may form the cover of the booklet.

Alternatively two or more of the sheets of material may be attached to form a booklet. In this embodiment, information may be concealed in all or some of the pages of the booklet.

The booklet may be an examination script booklet.

The sheet of material may be used in relation to medical records, legal documents or papers, or financial documents or papers.

The sheet of material may be used as a ballot paper or salary pay slip.

Typically when the foldable portion is adhered to the bonding portion information on the coverable area is concealed. The information is revealed by removing the detachable section.

Preferably the detachable section is not adhered to the coverable area when the foldable portion is folded.

Preferably the adhesive strip is provided with a release paper.

Preferably the detachable section is removed by tearing the first and second linear perforations.

Preferably the detachable section is a strip.

Optionally the detachable section may be of a different colour to the sheet of material to allow easy identification.

Optionally at least part of the foldable portion or detachable section has cross-hatching or other marking to conceal information on the sheet.

The foldable portion may be of any suitable shape. For example the foldable portion may constitute an edge of the sheet of material. In the preferred embodiment the foldable portion constitutes the vertical leading edge of the sheet of material.

According to a second aspect of the present invention, there is provided a method of using a sheet of material according to the first aspect comprising a bonding area, a coverable area, a foldable portion and first and second linear perforations which delimit a detachable section of the foldable portion to temporarily conceal confidential information, comprising the steps of:
(a) concealing information on the coverable area of the sheet of material by folding the sheet of material at the first linear perforation such that a first portion of the foldable portion covers the coverable area;
(b) adhering a second portion of the foldable portion to the bonding area by adhesive such that the adhesive covers an area of one of the second portion of the foldable portion and the bonding area having a set of anti-tamper perforations extending thereon; and
(c) revealing the confidential information by tearing the first and second linear perforations to remove the detachable section of the foldable portion,
wherein the adhesive prevents the separation of the second portion of the foldable portion from the bonding area without tearing at least some of the set of anti-tamper perforations.

An embodiment of the present invention will now be described, by way of example only, with reference to the following drawing of which:
Fig. 1 illustrates a prior art examination booklet cover before folding to conceal the coverable area;
Fig. 2 illustrates the prior art examination booklet cover of Fig. 1 after folding to conceal the coverable area;
Fig. 3 illustrates an examination booklet cover comprising a sheet of material according to the present invention before folding to conceal the coverable area;
Fig. 4 illustrates the examination booklet cover of Fig. 3 after folding to conceal the coverable area;
Fig. 5 illustrates another examination booklet cover comprising a sheet of material according to the present invention before folding to conceal the coverable area;
Fig. 6 illustrates the examination booklet cover of Fig. 5 after folding to conceal the coverable area; and
Figs. 7 to 9 illustrate various possible embodiments of a set of anti-tamper perforations used in the present invention.

Referring to Fig. 3, an embodiment of the present invention is generally depicted at 40 as an examination script booklet. The booklet is comprised of a number of sheets of paper (not shown) in which the candidate can write their answers to the examination, and a cover sheet 42, having a back and front. The cover sheet 42 is typically stapled together and over the sheets of paper by staples, in a known manner. In Fig. 3 only the front of the cover sheet 42 is shown.

The front of the cover sheet 42 of the examination script booklet 40 has an adhesive strip 44, which runs in a longitudinal or vertical direction and is provided with a removable release paper (not shown) which covers the adhesive strip 44. The release paper is typically torn away to reveal the adhesive strip 44. The front of the booklet 40 further comprises a foldable portion 46, which is defined by a first linear perforation 48 (shown by dotted lines).

The front of the booklet 40 typically contains instructions to the candidate and space 50 for entering non-sensitive information such as student number and the title of the exam paper. Space 52 for entering the name of the candidate and other information, such as candidate number or signature for verifying the identity of the candidate, is provided at a coverable area 54 between the adhesive strip 44 and the linear perforation 48. The foldable portion 46 can be folded at linear perforation 48 to cover the coverable area 54, so that candidate's name is concealed.

In use the examination candidate will fill in their name in the space 52 provided, and other details such as date, exam name and student number in the main section 50 at the front of the booklet 40. In order to conceal their identity prior to handing in the examination booklet for marking, the release paper is removed from the adhesive strip 44 and the foldable portion 46 is folded at the linear perforation 48, so that the edge of the cover sheet 42 is as shown in Fig. 4. The foldable portion 46 includes a first portion 56, which after folding covers the coverable area 54, and a second portion 58, which after folding covers the adhesive strip 44. Typically at least the first portion 56 of the foldable section 46 will have cross-hatching or other marking to help conceal the information on the coverable portion 54. The second portion 58 is adhered to the adhesive strip 44. The candidate's name will thereafter be covered by the foldable section 46, which will be held fast by the adhesive strip 44. The examination script booklet can then be marked without the risk of the marker knowing the identity of the candidate whose paper he or she is marking, thereby eliminating any risk of prejudice or bias towards the candidate.

The foldable portion 46 includes a second linear perforation 60 which separates the first 56 and second 58 portions of the foldable portion 46. The two linear perforations 48, 60 delimit and create a detachable strip, corresponding to the first portion 56. In order to reveal the name of the candidate after the script has been marked, the detachable strip 56 can be torn way by virtue of linear perforations 48, 60. The tearing can be initiated by pulling at one end 62, as shown at the bottom of Fig. 4. The detachable strip 56 may be of a different colour or shaded to enable easy identification of the portion of the foldable section, which can be removed. On tearing the linear perforations 48, 60 the strip 56 can be removed, thereby revealing the candidate name which was previously obscured by foldable portion 46.

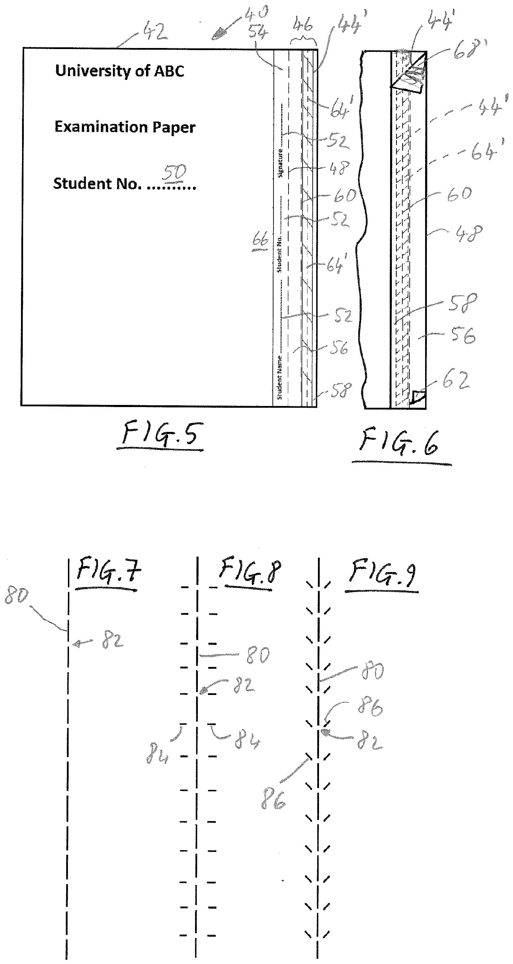

A set of anti-tamper perforations 64 is formed in the bonding area 66 of the cover sheet 42 beneath the adhesive strip 44. The anti-tamper perforations can comprise a simple linear perforation with slits 80 and ties 82, as shown in Fig. 7, in which the slits 80 are longer than the ties 82 between the slits. Alternatively, the anti-tamper perforations can comprise a linear perforation with slits 80 and ties 82 and additional transverse slits 84, to make the anti-tamper perforations even more frangible, as shown in Fig. 8. Alternatively, the anti-tamper perforations can comprise a linear perforation with slits 80 and ties 82 and additional diagonal or angled slits 86, as shown in Fig. 9. This arrangement has been shown to make the anti-tamper perforations particularly frangible.

If any attempt is made to peel away the second section 58, which is bonded by the adhesive strip 44 to the bonding area 66 of the cover sheet 42 beneath the adhesive strip 44, then the anti-tamper perforations 64 will promote tearing of the bonding area 66 beneath the peeled away portion 68. This is demonstrated at the top of Fig. 4, where a tear 70 is formed on the line of the anti-tamper perforations 64 beneath the peeled away portion 68.

Hence it is not possible to peel away the foldable portion 44 to expose the coverable area 54 without irreversibly damaging the cover sheet 42, and making it clear that the cover sheet 42 has been tampered with.

Figs. 5 and 6 show an embodiment which is identical to the one shown in Figs. 3 and 4, except that the adhesive strip 44' and the set of anti-tamper perforations 64' is provided on the second portion 58 of the foldable portion 46, instead of the bonding area 66. However all other elements are the same as in the embodiment of Figs. 3 and 4, and so are not described further. If any attempt is made to peel away the second section 58, which is bonded by the adhesive strip 44' to the bonding area 66 of the cover sheet 42, then the anti-tamper perforations 64' will promote tearing of the second section 58 which forms the peeled away portion 68'. This is demonstrated at the top of Fig. 6, where a tear 72 is formed on the line of the anti-tamper perforations 64' in the peeled away portion 68'.

The present invention can also have other applications. For example, it can be used with a pay slip, a ballot paper or a medical document, as is apparent from the description of such documents in EP 1 285 777 B1. The present invention may also be used in financial and legal documents and the like. For example, the invention may be used on bank statements.

In the preferred embodiments, the sheet of material is paper. However, it is recognised that a flexible cardboard material or even a plastic may be used.

The advantage of the present invention lies in the fact that confidential information can be hidden by folding back the foldable section of the one-piece sheet of paper on to the adhesive section (which may be an adhesive strip). The element which provides secure concealment of the information is created on the same piece of paper which bears the information it conceals. For example, in the case of the examination script booklet shown in Figs. 3 and 4, the name of the candidate can be hidden. In this example the need to use an external sticking source, such as double sided sticking tape is eliminated and the length of time taken to prepare the scripts for marking is minimised. Furthermore as the procedure is relatively simple and quick to perform, the candidate can be instructed to conceal his or her name prior to handing in the booklet at the end of the exam. As the foldable section, which covers the candidate's name, will be stuck fast to the adhesive strip, it is easy to identify any booklet, which has been tampered with. Any attempt to tamper with the booklet will result in tearing of the anti-tamper perforations.

The present invention has a further advantage in that it can be easily manufactured in one procedure. The one-piece sheet of paper can be manufactured by feeding reels of paper into a press. Text or graphics can be printed onto the paper, following which an adhesive strip can be applied to the front of the sheet in one continuous cyclic motion. A sheeter can be used in conjunction to create the linear perforations at the same time as the anti-tamper perforations, so that making a sheet which is tamper-evident is no more costly than making a standard sheet. The reel of paper can then be "sheeted" into individual sheets.

A further advantage of the present invention is that it provides a simple to use method of hiding sensitive information such as an examination candidate's name, medical information, salary details, voting choice or the like. This eliminates the need for what are often costly and timely procedures, required to conceal this information in conventional examination booklets, ballot papers, medical records, pay slips and the like.

## Claims

1. A sheet of material (42) having a coverable area (54), a foldable portion (46) and first (48) and second linear (60) perforations,
wherein the sheet of material (42) can be folded at the first linear perforation (48) such that a first portion (56) of the foldable portion (46) covers the coverable area (54) and a second portion (58) of the foldable portion (46) is adhered to a bonding area (66) adjacent to the coverable area (54),
wherein the first (48) and second (60) linear perforations delimit a detachable section (56) of the foldable portion (46) which can be removed after the foldable portion (46) has been adhered to the bonding area (66),
**characterised in that** a set of anti-tamper perforations (64) is provided in one or both of the second portion (58) of the foldable portion (46) and the bonding area (66).

2. The sheet (42) according to claim 1, wherein the anti-tamper perforations (64) extend from a bottom edge of the sheet (42) to a top edge of the sheet (42).

3. The sheet (42) according to claim 1 or 2, wherein the set of anti-tamper perforations (64) comprises a plurality of longitudinal slits (80) extending linearly in a longitudinal direction, adjacent slits being separated by a tie (82).

4. The sheet (42) according to claim 3, wherein each tie (82) is an unperforated portion of the sheet (42).

5. The sheet (42) according to claim 3 or 4, wherein the length of each slit (80) is greater than the length of each tie (82).

6. The sheet (42) according to any preceding claim, wherein the set of anti-tamper perforations (64) further comprise a plurality of transverse slits (84) which extend perpendicular to the longitudinal slits (80).

7. The sheet (42) according to claim 6, wherein the pair of transverse slits (84) extend at each tie (82) between the longitudinal slits (80), with one transverse slit (84) arranged on each side of the tie (82).

8. The sheet (42) according to any preceding claim, wherein the set of anti-tamper perforations (64) further comprise a plurality of angled slits (86) which extend at an angle of between 30° and 60° to the longitudinal slits (80).

9. The sheet (42) according to claim 8, wherein the pair of angled slits extend (86) at each tie (82) between the longitudinal slits (80), with one angled slit (86) arranged on each side of the tie (82).

10. The sheet (42) according to any preceding claim, wherein an adhesive strip (44) is provided on one or both of the second portion (58) of the foldable portion (46) and the bonding area (66).

11. The sheet (42) according to claim 10, wherein the adhesive strip (44) is provided on the second portion (58) of the foldable portion (46) and the set of anti-tamper perforations (64) extends along the second portion (58) of the foldable portion (46) beneath the adhesive strip (44).

12. The sheet according to claim 10, wherein the adhesive strip is provided on the bonding area (66) and the set of anti-tamper perforations (64) extends along the bonding area (66) beneath the adhesive strip.

13. The sheet according to claim 10, wherein the adhesive strip is provided on the second portion (58) of the foldable portion (46) and the set of anti-tamper perforations (64) extends along the bonding area (66).

14. The sheet according to claim 10, wherein the adhesive strip is provided on the bonding area (66) and the set of anti-tamper perforations (64) extends along the second portion (58) of the foldable portion (46).

15. A method of using a sheet of material (42) according to any preceding claim wherein the first (48) and second (60) linear perforations delimit a detachable section (56) of the foldable portion (46) to temporarily conceal confidential information, the method comprising the steps of:
(a) concealing information on the coverable area (54) of the sheet of material (42) by folding the sheet of material (42) at the first linear perforation (48) such that a first portion (56) of the foldable portion (46) covers the coverable area (54);
(b) adhering a second portion (58) of the foldable portion (46) to the bonding area (66) by adhesive such that the adhesive covers an area of one of the second portion (58) of the foldable portion (46) and the bonding area (66) having a set of anti-tamper perforations (64) extending thereon; and
(c) revealing the confidential information by tearing the first (48) and second (60) linear perforations to remove the detachable section (56) of the foldable portion (46),
wherein the adhesive prevents the separation of the second portion (58) of the foldable portion (46) from the bonding area (66) without tearing at least some of the set of anti-tamper perforations (64).

## Patentansprüche

1. Ein Materialbogen (42) mit einem abdeckbaren Bereich (54), einem faltbaren Abschnitt (46) und einer ersten (48) und zweiten (60) linearen Perforation,
wobei der Materialbogen (42) an der ersten linearen Perforation (48) so gefaltet werden kann, dass ein erster Abschnitt (56) des faltbaren Abschnitts (46) den abdeckbaren Bereich (54) abdeckt und ein zweiter Abschnitt (58) des faltbaren Abschnitts (46) an einen Haftbereich (66) neben dem abdeckbaren Bereich (54) geklebt wird,
wobei die erste (48) und zweite (60) lineare Perforation einen lösbaren Teilabschnitt (56) des faltbaren Abschnitts (46), der entfernt werden kann, nachdem der faltbare Abschnitt (46) an den Haftbereich (66) geklebt worden ist, begrenzt,
**dadurch gekennzeichnet, dass** in einem von dem zweiten Abschnitt (58) des faltbaren Abschnitts (46) und dem Haftbereich (66) oder in beiden ein Satz Anti-Manipulationsperforationen (64) bereitgestellt ist.

2. Bogen (42) gemäß Anspruch 1, wobei sich die Anti-Manipulationsperforationen (64) von einer unteren Kante des Bogens (42) zu einer oberen Kante des Bogens (42) erstrecken.

3. Bogen (42) gemäß Anspruch 1 oder 2, wobei der Satz Anti-Manipulationsperforationen (64) eine Vielzahl von länglichen Schlitzen (80) beinhaltet, die sich in einer länglichen Richtung linear erstrecken, wobei nebeneinander liegende Schlitze durch eine Verbindung (82) getrennt sind.

4. Bogen (42) gemäß Anspruch 3, wobei jede Verbindung (82) ein nicht perforierter Abschnitt des Bogens (42) ist.

5. Bogen (42) gemäß Anspruch 3 oder 4, wobei die Länge jedes Schlitzes (80) größer als die Länge jeder Verbindung (82) ist.

6. Bogen (42) gemäß einem der vorhergehenden Ansprüche, wobei der Satz Anti-Manipulationsperforationen (64) ferner eine Vielzahl von querverlaufenden Schlitzen (84) beinhaltet, die sich senkrecht zu den länglichen Schlitzen (80) erstrecken.

7. Bogen (42) gemäß Anspruch 6, wobei sich das Paar querverlaufender Schlitze (84) an jeder Verbindung (82) zwischen den länglichen Schlitzen (80) erstreckt, wobei auf jeder Seite der Verbindung (82) ein querverlaufender Schlitz (84) angeordnet ist.

8. Bogen (42) gemäß einem der vorhergehenden Ansprüche, wobei der Satz Anti-Manipulationsperforationen (64) ferner eine Vielzahl von abgewinkelten Schlitzen (86) beinhaltet, die sich in einem Winkel von zwischen 30° und 60° zu den länglichen Schlitzen (80) erstrecken.

9. Bogen (42) gemäß Anspruch 8, wobei sich das Paar abgewinkelter Schlitze (86) an jeder Verbindung (82) zwischen den länglichen Schlitzen (80) erstreckt, wobei auf jeder Seite der Verbindung (82) ein abgewinkelter Schlitz (86) angeordnet ist.

10. Bogen (42) gemäß einem der vorhergehenden Ansprüche, wobei auf einem von dem zweiten Abschnitt (58) des faltbaren Abschnitts (46) und dem Haftbereich (66) oder auf beiden ein Klebestreifen (44) bereitgestellt ist.

11. Bogen (42) gemäß Anspruch 10, wobei der Klebestreifen (44) auf dem zweiten Abschnitt (58) des faltbaren Abschnitts (46) bereitgestellt ist und sich der Satz Anti-Manipulationsperforationen (64) entlang dem zweiten Abschnitt (58) des faltbaren Abschnitts (46) unterhalb des Klebestreifens (44) erstreckt.

12. Bogen gemäß Anspruch 10, wobei der Klebestreifen auf dem Haftbereich (66) bereitgestellt ist und sich der Satz Anti-Manipulationsperforationen (64) entlang dem Haftbereich (66) unterhalb des Klebestreifens erstreckt.

13. Bogen gemäß Anspruch 10, wobei der Klebestreifen auf dem zweiten Abschnitt (58) des faltbaren Abschnitts (46) bereitgestellt ist und sich der Satz Anti-Manipulationsperforationen (64) entlang dem Haftbereich (66) erstreckt.

14. Bogen gemäß Anspruch 10, wobei der Klebestreifen auf dem Haftbereich (66) bereitgestellt ist und sich der Satz Anti-Manipulationsperforationen (64) entlang dem zweiten Abschnitt (58) des faltbaren Abschnitts (46) erstreckt.

15. Ein Verfahren zum Verwenden eines Materialbogens (42) gemäß einem der vorhergehenden Ansprüche, wobei die erste (48) und zweite (60) lineare Perforation einen lösbaren Teilabschnitt (56) des faltbaren Abschnitts (46) begrenzt, um vertrauliche Informationen vorübergehend zu verbergen, wobei das Verfahren die folgenden Schritte beinhaltet:
(a) Verbergen von Informationen auf dem abdeckbaren Bereich (54) des Materialbogens (42) durch Falten des Materialbogens (42) an der ersten linearen Perforation (48), so dass ein erster Abschnitt (56) des faltbaren Abschnitts (46) den abdeckbaren Bereich (54) abdeckt;
(b) Kleben eines zweiten Abschnitts (58) des faltbaren Abschnitts (46) an den Haftbereich (66) mittels eines Klebemittels, so dass das Klebemittel einen Bereich von einem von dem zweiten Abschnitt (58) des faltbaren Abschnitts (46) und dem Haftbereich (66), auf dem sich ein Satz Anti-Manipulationsperforationen (64) erstreckt, abdeckt; und
(c) Aufdecken der vertraulichen Informationen durch Abreißen der ersten (48) und zweiten (60) linearen Perforation, um den lösbaren Teilabschnitt (56) des faltbaren Abschnitts (46) zu entfernen,
wobei das Klebemittel die Trennung des zweiten Abschnitts (58) des faltbaren Abschnitts (46) von dem Haftbereich (66), ohne dass mindestens ein Teil von dem Satz Anti-Manipulationsperforationen (64) abgerissen wird, verhindert.

## Revendications

1. Une feuille de matériau (42) présentant une zone pouvant être recouverte (54), une partie pouvant être repliée (46) et des premiers (48) et deuxièmes (60) pointillés linéaires,
la feuille de matériau (42) pouvant être repliée au niveau des premiers pointillés linéaires (48) de telle sorte qu'une première partie (56) de la partie pouvant être repliée (46) recouvre la zone pouvant être recouverte (54) et qu'une deuxième partie (58) de la partie pouvant être repliée (46) soit mise en adhérence sur une zone de collage (66) adjacente à la zone pouvant être recouverte (54),
où les premiers (48) et deuxièmes (60) pointillés linéaires délimitent une section pouvant être détachée (56) de la partie pouvant être repliée (46), laquelle peut être retirée après que la partie pouvant être repliée (46) a été mise en adhérence sur la zone de collage (66),
**caractérisée en ce qu'**un ensemble de pointillés anti-falsification (64) est fourni soit dans la deuxième partie (58) de la partie pouvant être repliée (46), soit dans la zone de collage (66), soit dans les deux.

2. La feuille (42) selon la revendication 1, où les pointillés anti-falsification (64) s'étendent d'un bord du bas de la feuille (42) à un bord du haut de la feuille (42).

3. La feuille (42) selon la revendication 1 ou la revendication 2, où l'ensemble de pointillés anti-falsification (64) comprend une pluralité de fentes longitudinales (80) s'étendant de façon linéaire dans une direction longitudinale, les fentes adjacentes étant séparées par une attache (82).

4. La feuille (42) selon la revendication 3, où chaque attache (82) est une partie non perforée de la feuille (42).

5. La feuille (42) selon la revendication 3 ou la revendication 4, où la longueur de chaque fente (80) est supérieure à la longueur de chaque attache (82).

6. La feuille (42) selon n'importe quelle revendication précédente, où l'ensemble de pointillés anti-falsification (64) comprend en outre une pluralité de fentes transversales (84) qui s'étendent de façon perpendiculaire aux fentes longitudinales (80).

7. La feuille (42) selon la revendication 6, où la paire de fentes transversales (84) s'étend au niveau de chaque attache (82) entre les fentes longitudinales (80), une fente transversale (84) étant arrangée sur chaque côté de l'attache (82).

8. La feuille (42) selon n'importe quelle revendication précédente, où l'ensemble de pointillés anti-falsification (64) comprend en outre une pluralité de fentes en angle (86) qui s'étendent en formant en angle compris entre 30° et 60° par rapport aux fentes longitudinales (80).

9. La feuille (42) selon la revendication 8, où la paire de fentes en angle (86) s'étend au niveau de chaque attache (82) entre les fentes longitudinales (80), une fente en angle (86) étant arrangée sur chaque côté de l'attache (82).

10. La feuille (42) selon n'importe quelle revendication précédente, où une bande adhésive (44) est fournie soit sur la deuxième partie (58) de la partie pouvant être repliée (46), soit sur la zone de collage (66), soit sur les deux.

11. La feuille (42) selon la revendication 10, où la bande adhésive (44) est fournie sur la deuxième partie (58) de la partie pouvant être repliée (46) et l'ensemble de pointillés anti-falsification (64) s'étend le long de la deuxième partie (58) de la partie pouvant être repliée (46) en dessous de la bande adhésive (44).

12. La feuille selon la revendication 10, où la bande adhésive est fournie sur la zone de collage (66) et l'ensemble de pointillés anti-falsification (64) s'étend le long de la zone de collage (66) en dessous de la bande adhésive (44).

13. La feuille selon la revendication 10, où la bande adhésive est fournie sur la deuxième partie (58) de la partie pouvant être repliée (46) et l'ensemble de pointillés anti-falsification (64) s'étend le long de la zone de collage (66).

14. La feuille selon la revendication 10, où la bande adhésive est fournie sur la zone de collage (66) et l'ensemble de pointillés anti-falsification (64) s'étend le long de la deuxième partie (58) de la partie pouvant être repliée (46).

15. Une méthode d'utilisation d'une feuille de matériau (42) selon n'importe quelle revendication précédente où les premiers (48) et deuxièmes (60) pointillés linéaires délimitent une section pouvant être détachée (56) de la partie pouvant être repliée (46) pour cacher temporairement des informations confidentielles, la méthode comprenant les étapes consistant :
(a) à cacher des informations sur la zone pouvant être recouverte (54) de la feuille de matériau (42) en repliant la feuille de matériau (42) au niveau des premiers pointillés linéaires (48) de telle sorte qu'une première partie (56) de la partie pouvant être repliée (46) recouvre la zone pouvant être recouverte (54) ;
(b) à mettre en adhérence une deuxième partie (58) de la partie pouvant être repliée (46) sur la zone de collage (66) par de l'adhésif de telle sorte que l'adhésif recouvre une zone soit de la deuxième partie (58) de la partie pouvant être repliée (46), soit de la zone de collage (66) présentant un ensemble de pointillés anti-falsification (64) s'étendant sur celle-ci ; et
(c) à révéler les informations confidentielles en déchirant les premiers (48) et deuxièmes (60) pointillés linéaires afin de retirer la section pouvant être détachée (56) de la partie pouvant être repliée (46),
où l'adhésif empêche la deuxième partie (58) de la partie pouvant être repliée (46) de se séparer de la zone de collage (66) sans déchirer au moins une partie de l'ensemble de pointillés anti-falsification (64).
